# EUROPEAN PATENT APPLICATION

(11) **EP 1 874 003 A1**
(43) Date of publication of application: **02.01.2008**
(21) Application number: 07115417.3
(22) Date of filing: 25.08.2003
(51) Int. Cl.: H04L 29/08, H04L 29/14, H04M 3/22

(54) **High availability software based contact centre**

(30) Priority: 28.08.2002 FI 20021540
(62) Divisional of application: 03790975.1
(71) Applicant: Wicom Communications Ltd., 02920 Espoo (FI)
(72) Inventor: Purontaus, Jouni, 02920 Espoo (FI); Keskiniva, Arto, 06400 Porvoo (FI); Loimuneva, Tero, 05800 Hyvinkää (FI); Auvinen, Tommi, 01630 Vantaa (FI); Hännikäinen, Mikko, 00180 Helsinki (FI)
(74) Representative: Konkonen, Tomi-Matti Juhani

(57) **Abstract**

The invention relates to a method and means for ensuring high availability of services in a communication server. In particular the invention relates to a method and means for ensuring high availability of services in a software based contact centre. The invention is based on a developed application of virtual backup units for ensuring availability in a software based contact centre. The software based contact centre will have a high availability controller, which will have logical connections to virtual backup units on the same server, or different, even distributed servers. The virtual backup unit will typically contain a set of resources that could potentially fail. Once a failure of a resource takes place, a virtual backup unit may be initialised at any server, and some or all parts of the virtual backup unit are arranged to replace the failed resource.

## Description

### TECHNICAL FIELD OF INVENTION

The invention relates to a method and means for ensuring high availability of services in a communication server. In particular the invention relates to a method and means for ensuring high availability of services in a software based communication server.

### BACKGROUND OF THE INVENTION

Packet switched communication is growing in importance everyday in comparison to traditional circuit communication. This development has resulted in a diversity of communication methods. Also, this development has resulted in many traditional hardware devices being replaced by substitutes that are typically software engineered on a simple communication server platform. For example, arrays of expensive digital signal processors were once needed in circuit switched servers, whereas now a server with a single processor may handle several packet switched connections.

For example corporate contact centres are today mainly realised with a server and associated software to handle a multitude of communication and contact management tasks. However, such contact centres are plagued by poor availability. For one reason or another an application required by an employer or a customer ceases to work at a critical moment. An IP-address is lost and cannot be promptly acquired to ensue communication. A server device crashes just when users are using applications on that particular server. Ensuring availability of services to users, even when some services fail at some network node is clearly a critical issue of growing importance.

One prior embodiment of a software call centre is exhibited in WO0215030A1, which is taken here as reference. This publication features a mechanism for improving availability, mirrored hot backup, where failed resources can be dynamically replaced by new resources in order to guarantee continued availability of the resource. This feature of the aforementioned document is demonstrated with reference to figures 23-27.

Another prior art embodiment for ensuring the availability of a packet switched phone call is demonstrated in US6389005, where a PSTN phone connection is formed when the Quality of Service (QoS) for the packet switched connection deteriorates below a certain threshold value.

However, the prior art methods for ensuring availability have inherent disadvantages. In mirrored hot backup, a complete redundant set of hardware devices is required for the backup mirror. Mirroring as exhibited in WO0215030A1 is clearly a very costly alternative for ensuring availability, as the hardware and software investments for the mirror set of devices are nearly equal to those of the actual devices being used.

Another disadvantage in accordance with the prior art is the confusion that results with the reallocation of IP addresses, when services do crash and the mirror resource is being used. Typically in accordance with the prior art the mirror resources need to assume a new IP address. This introduces the added difficulty for external applications needing to decipher which IP address is related to which new resource.

### SUMMARY OF THE INVENTION

The object of the invention is to overcome some of the drawbacks related to the methods mentioned above. Another object of the invention is to provide a new, simple and reliable method and device for ensuring high availability in software based contact centre. A further object of the invention is to reduce the costs and initial investments related to ensuring high availability of services in software based contact centre.

An even further object of the invention is to provide a new, simple and reliable method and device for transferring IP-addresses between resources in a software contact centre so that external applications only see an infinitesimal interruption in time, otherwise everything ensuring *ceteris paribus.*

In this application "software based contact centre" is taken to mean any contact centre designed to connect voice calls, VoIP (Voice over IP) calls, emails, facsimiles, SMS-messages (Short Message Service), MMS-messages (Multimedia Message Service), and/or web contacts for example. In addition to connecting aforementioned communication "software based contact centre" typically also manages the contact information needed for such communication.

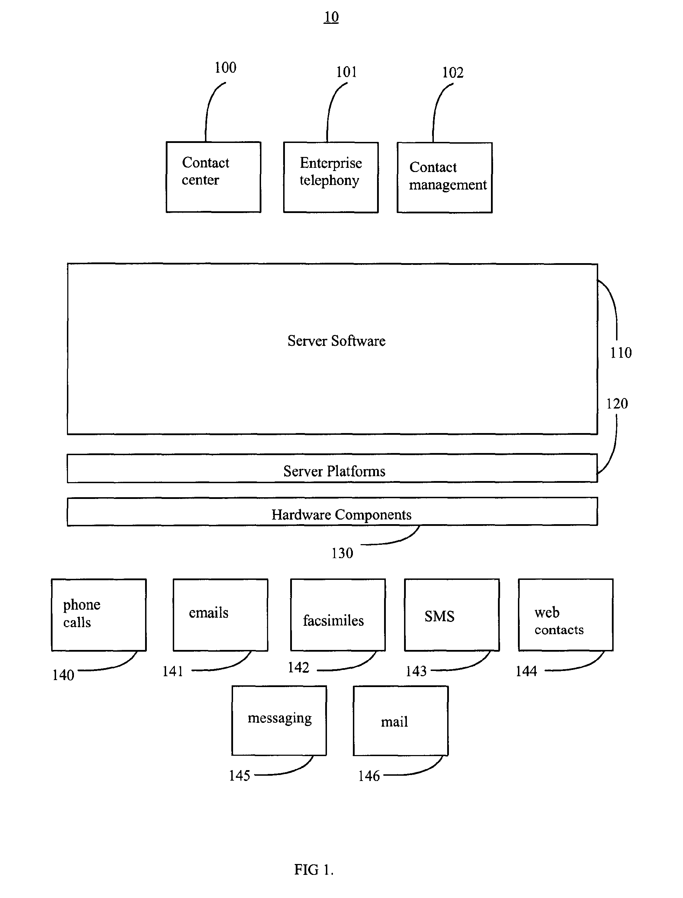

Exemplary software based contact centre architecture is presented in figure 1. The server software 110 may have several applications, such as a contact centre application 100, an enterprise telephony application 101 and/or a contact management application 102, for example. The contact centre application 100 may provide at least some of the following services: provisioning services, online monitoring services, activity reporting services, customized log reporting services, statistics collection, authentication services, fault management. The enterprise telephony application 101 is an advanced telephony application, that may incorporate functions such as, end-user & agent terminal services, switchboard & contact center services, conference call services, voice mail services, call recording services, outbound audio player services, instant messaging services and/or directory services. The contact management application 102 may incorporate for example, contact manager services, enhanced contact directory services, multicast messenger services and/or outbound project manager services.

The server software 110 is typically arranged to run on at least one server platform 120, which is at the nearest interface with the server hardware 130. The server software 110 may perform intelligent routing functions such as ACD, Skill Based Routing (SBR), Call queues, IVR (Intelligent Voice Recognition). The server 110 may also feature a Gateway Controller, Communication Event Manager and/or a Contact Process Manager.

The software based contact centre 10 may for example connect and manage such communication as phone calls 140, emails 141, facsimiles 142, SMS 143, web contacts 144, messaging 145, mail 146.

The invention is based on a developed application of virtual backup units for ensuring availability in a software based contact centre. The software based contact centre will have a high availability controller, which will have logical connections to virtual backup units on the same server, or different, even distributed servers. The virtual backup unit will typically contain a set of resources that could potentially fail. Once a failure of a resource takes place, a virtual backup unit may be initialised at any server, and some or all parts of the virtual backup unit are arranged to replace the failed resource.

Thus the method of the invention is especially applicable to improving the availability and level of trust in software based contact centres.

In one preferred embodiment of the method of the invention, there are several virtual backup units distributed on several servers that can backup a particular service. In this embodiment virtual backup units can be started on any server to replace a failed resource.

In another preferred embodiment of the invention there is only one virtual backup unit on one server ensuring availability on several servers that are in use. This virtual backup unit may take the role of any server upon failure.

Consequently, a significant advantage of the invention is that it is possible to provide either significantly less or more virtual backup units than there are servers in use, and these virtual backup units may be realised on a random number of server machines. This allows for great flexibility in both hardware investments and the level of availability sought from the system.

The invention also has the advantage of allowing to capture or transfer the IP address of the failed resource to the virtual backup unit. Thus, the external agents only see a short interruption in service, and afterwards all services resume as normal.

A method for ensuring high availability in a software based contact centre in accordance with the invention, comprising at least one high availability control unit is characterised by the following steps,
- at least one resource provided by the software based contact centre fails,
- at least one virtual backup unit is initialised to take over at least one failed resource,
- at least one resource of at least one virtual backup unit replaces at least one failed resource,
- service of at least one failed resource is resumed.

An arrangement for ensuring high availability in a software based contact centre in accordance with the invention, comprising at least one high availability control unit is characterised in that,
- at least one high availability control unit is arranged to have logical communication connections to at least one virtual backup unit,
- at least one high availability control unit is arranged to initialise at least one virtual backup unit to replace at least one failed resource with a backup resource.

A memory storage unit in accordance with the invention containing software based contact centre server software, further comprising at least one high availability control unit is characterised in that,
- software based contact centre server software and/or high availability control unit is arranged to form at least one virtual backup unit and/or form logical connections to at least one predefined virtual backup unit that are stored in the memory storage unit,
- the high availability control unit is arranged to initialise at least one virtual backup unit to replace at least one failed resource with a backup resource.

The best mode of the invention at this time is considered to be the application of several distributed virtual backup units in increasing the availability of a particular software based contact server.

### DESCRIPTION OF DRAWINGS AND EMBODIMENTS

The invention will be explained in detail below with reference to the accompanying drawings, in which
- Figure 1: illustrates a schematic of a general exemplary software based contact centre.
- Figure 2: is a schematic block diagram of the high availability software based contact centre in accordance with the invention.
- Figure 3: illustrates the method of replacing a failed resource in accordance with the invention as a flow diagram.
- Figure 4: is an exemplary embodiment of the high availability software based contact centre in accordance with the invention.
- Figure 5: is an exemplary embodiment of a High Availability Controller subsystem used in a software based contact centre in accordance with the invention,
- Figure 6: is a schematic diagram of High Availability Controller interfaces and data flows in accordance with the invention,
- Figure 7: is a schematic diagram of a network of High Availability Controllers in accordance with the invention,
- Figure 8: exhibits a method for controlling the configuration of a high availability controller in accordance with the invention as a flow diagram.
- Figure 9: exhibits use cases of the invention as a schematic flow diagram.

Some embodiments of the invention will be described in the dependent claims.

### DETAILED DESCRIPTION OF EMBODIMENTS

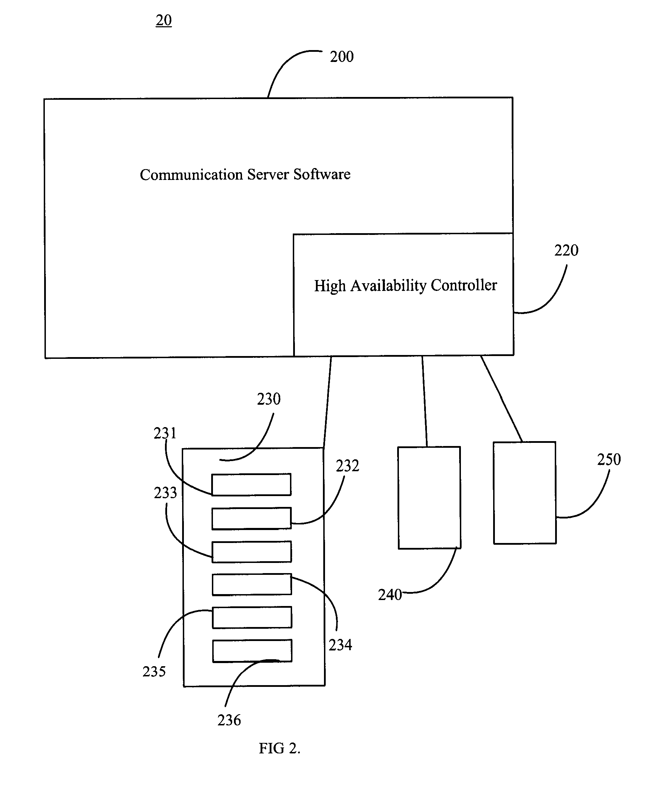

In figure 2 the communication server software 200 has a high availability controller subsystem 220. The high availability controller and the server software 200 may be realised on the same or different hardware servers. The high availability controller has logical connections to virtual backup units 230, 240, 250, which may be distributed on several servers. The virtual backup units comprise a set of resources designed to replace failing resources in the system. Each virtual unit 230, 240, 250 will typically contain for example an application server (CEM) 231 for running applications, a call dispatcher (CD) 232 for call routing and switching and for communicating with a GWS/GWC (Gateway System/Gateway Controller), H323 Bridge (HB) 233 for communicating with and H323 devices, H323 Gatekeeper (HGK) 234 for H323 devices, file storage 235 and an IP address 236, that may change dynamically.

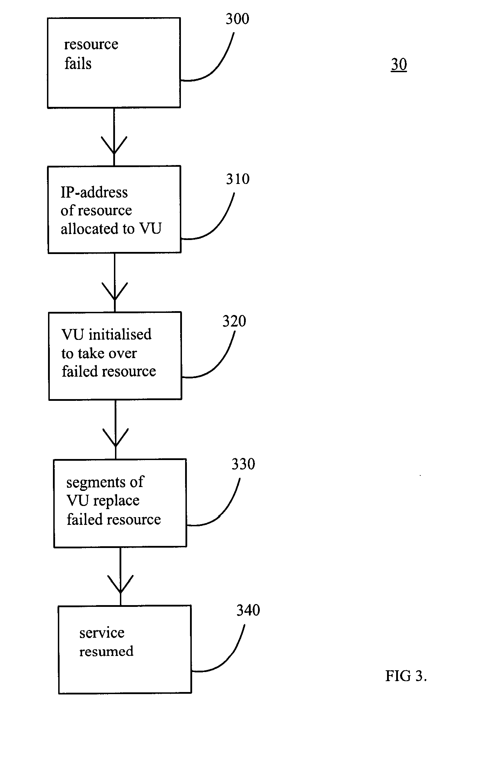

In phase 300 of figure 3 a resource failure occurs or is detected. In phase 310 the IP-address used by the resource is allocated to a virtual backup unit (VU), for example by the High Availability Controller. In phase 320 the virtual unit is initialised to take over the responsibility or operation of the failed resource. In phase 330 some or all segments of the virtual unit (VU) replace the failed resource. A failed resource or a segment of a virtual unit may be or example an application server (CEM) for running applications, a call dispatcher (CD) for call routing and switching, call dispatcher for communicating with a GWS/GWC (Gateway System/Gateway Controller), H323 Bridge (HB) for communicating with and H323 devices, H323 Gatekeeper (HGK) for H323 devices, file storage and/or just a plain IP address. In phase 340 service is resumed normally by at least one virtual unit.

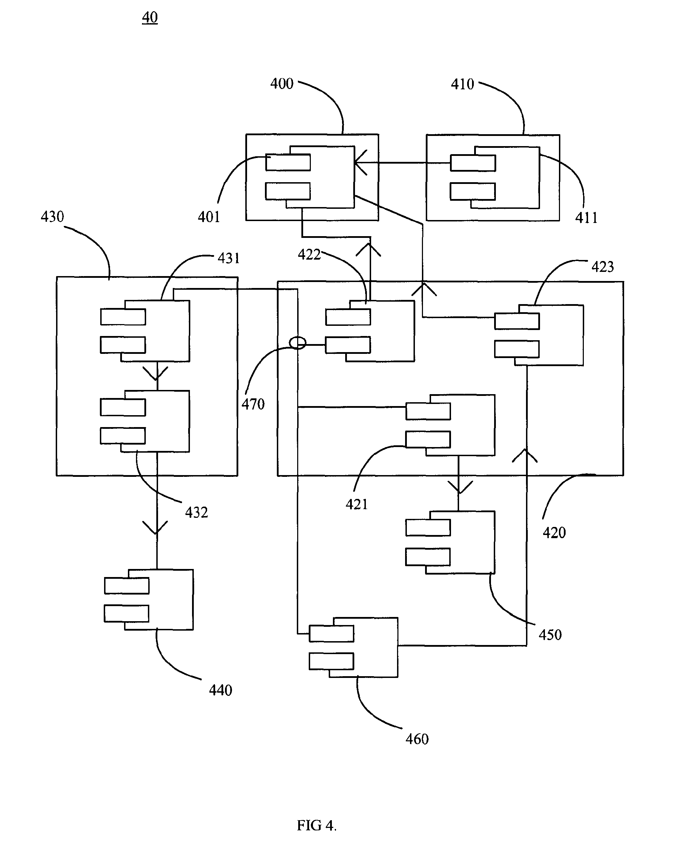

Figure 4 presents a high availability software based contact centre in accordance with the invention as a schematic drawing. Database server block 400 contains at least one database server executable software 401. The disk array 410 contains at least one database file system 411, and is logically connected to at least one database server 400. The gateway server 430 features at least one executable gateway software 431 and gateway hardware 432. The gateway server 430 is typically connected to at least one external phone centre 440 in some embodiments.
The application server 420 features typically at least one executable CEM 422, at least one executable Web Server 423 and at least one executable H323 gateway 421. The executable H323 gateway is typically connected to at least one H323 phone. The application server 420 features also call control 470, which may connect for example the gateway server 430, at least one executable H323 gateway 421, at least one executable CEM 422, and/or at least one virtual phone 460 in some embodiments. The executable web server is typically connected to at least one database server 400.

Any of the typical resources of the outlined software based contact server may be duplicated in virtual backup units in any permutations or combinations. For example, in one non-restrictive and exemplary case, there are two database servers (primary and backup) running an SQL server with data files on a shared failsafe disk array. In addition, there are five application servers (three primaries and two backups) running IIS, CEM, Bridge and two gateway servers (primary and backups) with special gateway hardware and software.

The exemplary system will comprise also diverse software, such as one SQL server database system on a database server with the redundant backup unit. This will include also the configuration database. One gateway system on a gateway server is also included with one redundant backup unit, and two IIS's in two different configurations in any applications server. The system will also comprise three CEM software systems in three different configurations in any application server, and platform monitoring software on each machine.

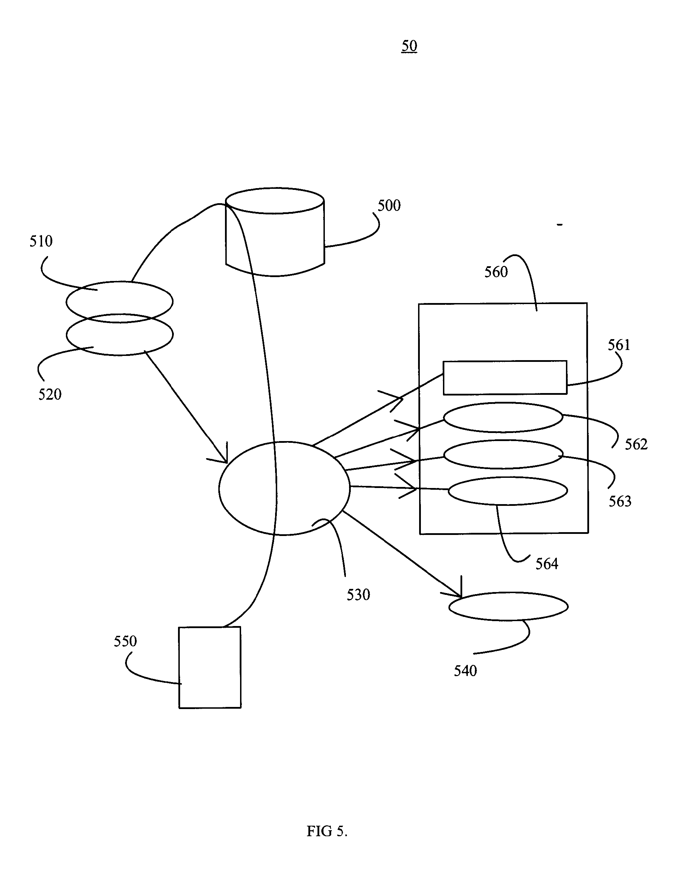

Figure 5 exhibits an exemplary embodiment of a high availability controller subsystem used in a software based contact centre in accordance with the invention. The HAC system comprises typically at least two user interfaces, the administrator graphical user interface 510, which can be used to affect the configuration database 500, and the configuration XML (Extended Markup Language). The other user interface is the HAC control user interface 520 used to operate the high availability controller 530. The user interfaces 510, 520 can be used for viewing and controlling the high availability controller 530 instances remotely. Via the user interface one should be able to e.g. activate, inactivate, and/or reset the high availability controller 530 instance.

The high availability controller 530 interfaces with one or several virtual units 560 and their resources 561, 562, 563, 564, or other external processes 540. The high availability controller 530 controls and monitors at least one virtual unit 560 and its resources, which may include in some embodiments IP-addresses, CEM/CD, gateways and bridges.

The high availability controller 530 and virtual unit 560 system, or a network of them is centrally configurable and manageable in many embodiments. This system 530, 560 will typically be able to fetch its configuration data for its managed processes from the central configuration database. In some embodiments the system configuration data is copied locally, and when the central configuration database 500 is unavailable, the local copy 550 will be used instead. In many embodiments the high availability controller 530 instances are uniquely identified for configuration and monitoring purposes. Likewise each high availability controller 530 is typically named uniquely, and this identity is used to associate configuration data and statistics.

The high availability controller 530 should be able to analyse the overall system status of a software based contact centre, and initiate corrective actions if problems are found. Upon a process failure, the failed unit could be automatically deactivated and a redundant backup unit activated. Additional automatic reconfigurations might also be taken to e.g. reroute some traffic through the software based contact centre or elsewhere in some embodiments.

Typically the shutting down, crashing, freezing or resetting of a high availability controller 530 instance will not prevent the production of a service offered by the managed processes unless so specifically desired in some embodiments. The high availability controller 530 is thus able to isolate failed processes in accordance with the invention.

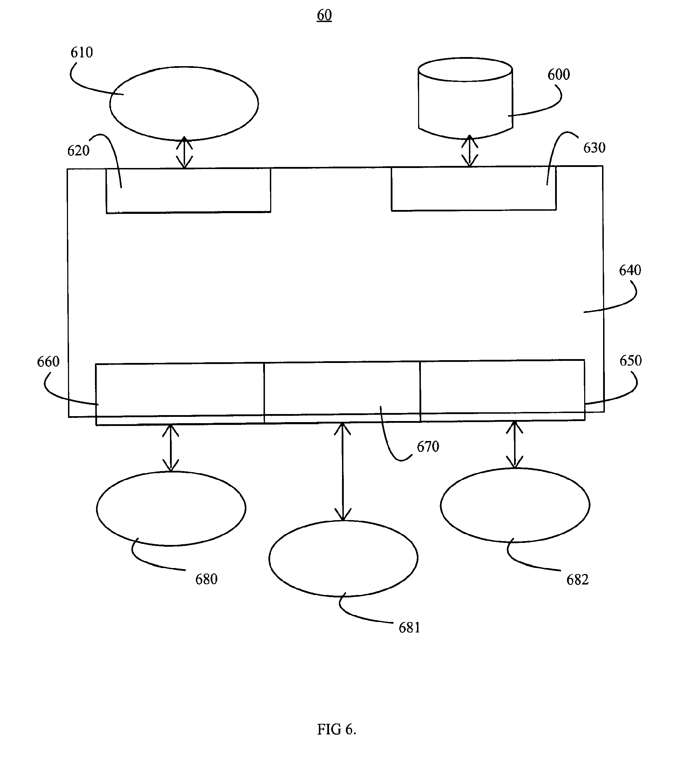

Figure 6 exhibits a schematic diagram of high availability controller 640 interfaces and data flows in accordance with the invention. The high availability controller user interface 610 interfaces with the high availability controller control interface 620 in the high availability controller 640, and the configuration database 600 interfaces with the configuration database interface 630. The high availability controller 640 features typically also monitoring and controlling adapters and plug-ins for proprietary services 660, MS-Windows Services 670, or other external services 650. The aforementioned adapters 650, 670, 660 operate as a data flow interface for at least one external process 682, at least one Windows service process 681 and at least one proprietary process 680, respectively. In some embodiments some or all of the interfaces are rigidly defined (e.g. statistics interface), but some are actually placeholders for actual interface plug-ins (e.g. process monitors and controllers).

The adapter and plug-in for proprietary services 660 interfaces service processes for statistical data via a shared memory mapped file in some embodiments. The adapter and plug-in for Windows services 670 is used to gather performance statistics from processes to high availability controller 640 using Windows Performance statistics collection mechanisms. The monitored process may publish the monitored statistics in order to use the data for status and health monitoring purposes. The adapter and plug-in for Windows services 670 may also be used to start, stop and restart a Windows process and monitor process existence and status, such as not installed, started, stopped, starting, stopping etc. In some embodiments the interface 670 allows the usage of Windows shell commands to execute custom monitoring and controlling mechanisms. The target shell command string is called to perform the actual tasks and return the results to this interface 670 in some embodiments.

The monitoring that the high availability controller 640 exhibits allows to monitor the status of the managed processes using configurable methods in some embodiments. In addition, high availability controller 640 is capable of collecting various operational statistics from the controlled processes in some embodiments. In many embodiments high availability controller 640 also features the intelligence relying on configuration and capabilities on deciding which statistics are collected and how. Monitoring activity will also typically include associating thresholds with the monitored statistics for noting a change in a status of a monitored target. The high availability controller 640 will also typically feature a timeout for monitoring procedures, so the high availability controller 640 should not get blocked indefinitely even if a monitoring thread does.

The controlling features that the high availability controller 640 exhibits allow the system to start and stop its controlled processes. The high availability controller 640 is able to initiate a reconfiguration of a controlled process in some embodiments. Also, the high availability controller 640 will be able to configure some attributes of its controlled processes. The high availability controller 640 will be able to set the entire configuration data for its controlled processes using configurable methods in some embodiments. Likewise, the high availability controller 640 is able to set the configuration data in Windows registry in many embodiments.

In some embodiments the high availability controller 640 is able to generate XML configuration files for its controlled processes. Likewise, the high availability controller 640 is able to generate custom configuration files for its controlled processes. The high availability controller 640 will also typically feature a timeout for monitoring procedures, so the high availability controller 640 should not get blocked indefinitely even if a monitoring thread does.

The high availability controller 640 may also issue alarms that signify the occurrence of unexpected circum stances. There are separate alarms for failed initialisation upon start-up, failing configuration, process termination and other conditions in accordance with the invention.

The high availability controller 640 may dispatch the alarms through SNMP (Simple Network Management Protocol). SNMP may also be used in other process and configuration monitoring and control in accordance with the invention.

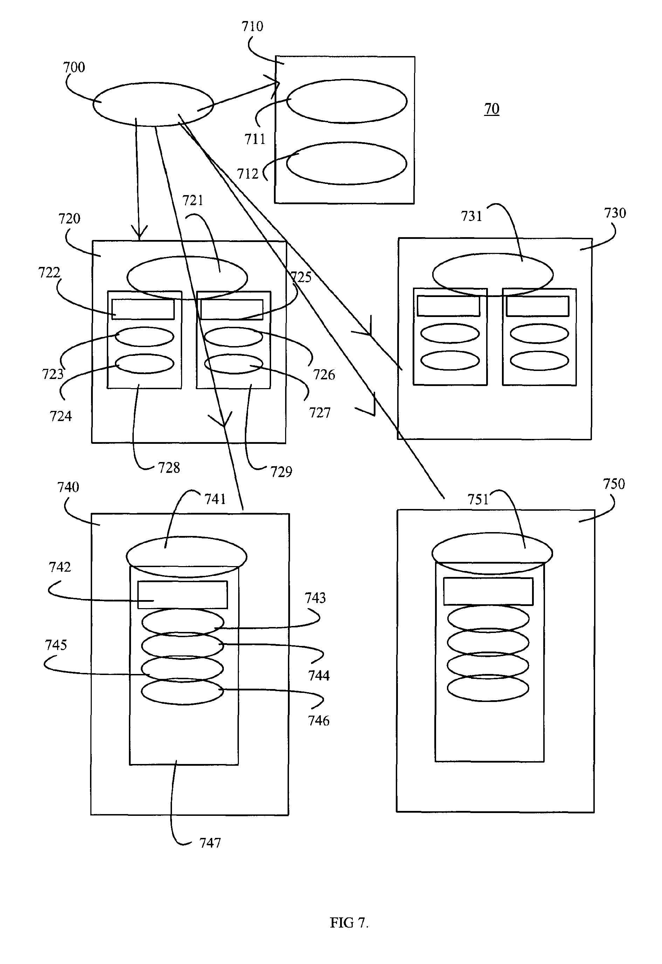

Figure 7 is a schematic diagram of a network of high availability controllers and associated virtual units in accordance with the invention. The high availability controller user interface 700 is used to control and monitor five logical network nodes 710, 720, 730, 740, 750 in this particular exemplary embodiment. The database cluster 710 typically comprises a HAC database and an SQL server, the CEM Primary 720 essentially comprises a HAC primary 721 and two virtual units 728, 729. These virtual units typically comprise resources such as IP-address 722, 725, CEM/CD 723, 726, and a bridge 724, 727. The CEM Backup 730 comprises the same in many embodiments.

The gateway primary 740 comprises a high availability controller for gateway pool, and at least one virtual unit with an IP-address 742, CEM/CD 743, and a series of gateways 744, 745, 746. The gateway backup node 750 comprises the same in many embodiments.

Direct commands to high availability controllers 711, 721, 731, 741, 751 may be given from the HAC control user interface 700. High availability controllers 711, 721, 731, 741, 751 may be forced to refresh its configuration data from the database in some embodiments. It is also possible that the high availability controllers 711, 721, 731, 741, 751 may also be forced manually to initiate a switch between backup unit(s). Especially in embodiments where high availability controllers 711, 721, 731, 741, 751 are independent of each other, the switch between backup units has to be typically done manually by inactivating the active 720, 740 and activating a standby backup unit 730, 750.

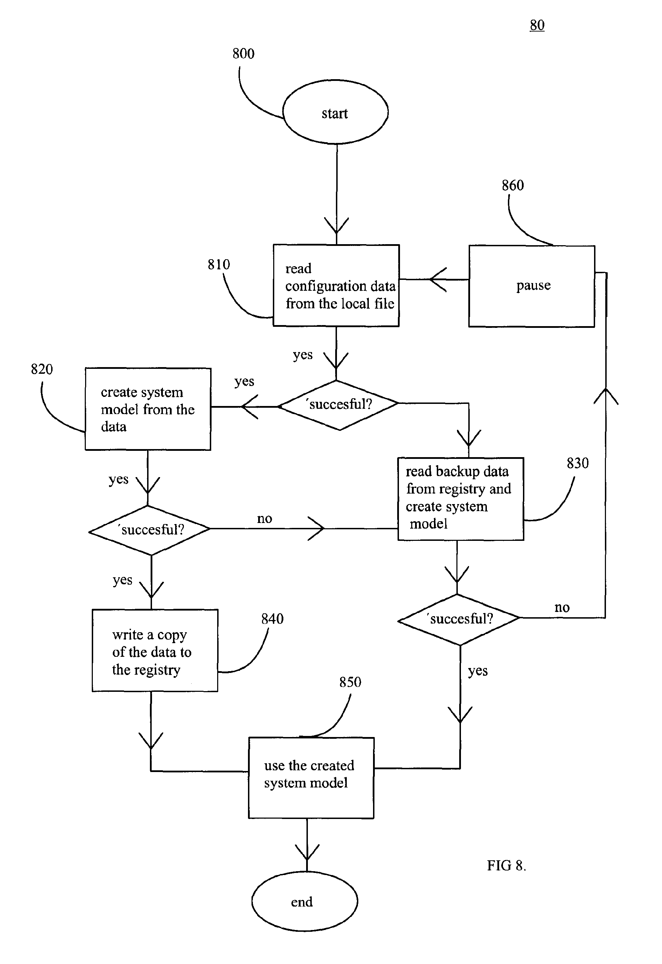

Figure 8 exhibits a method for controlling the configuration of a high availability controller in accordance with the invention. Upon start up 800 the high availability controller attempts to read configuration from the local file 810. If this is an inaccessible option, the high availability controller attempts to read backup data from registry and create a system model 830. If local copy of configuration data file is inaccessible, the high availability controller pauses 860 and retries each source until successful.

However, if configuration is read successfully from the local file, the system model is created from the data in phase 820. If model creation is successful a copy of the data is written to the registry 840. If the model creation fails backup data is read from registry and the system model is created 830, and if even this proves unsuccessful the process is paused 860 and retried. In phase 850 the created system model is finally used.

In some embodiments the high availability controller instances relay changes in the system model using the high availability controller protocol over a TCP/IP network. In addition version control mechanisms may be applied to the system model data, with which the changes in the model are propagated reliably to all instances automatically. This has an obvious benefit in that the local file need not be manually copied every time to different high availability controller instances, when changes are made to the system.

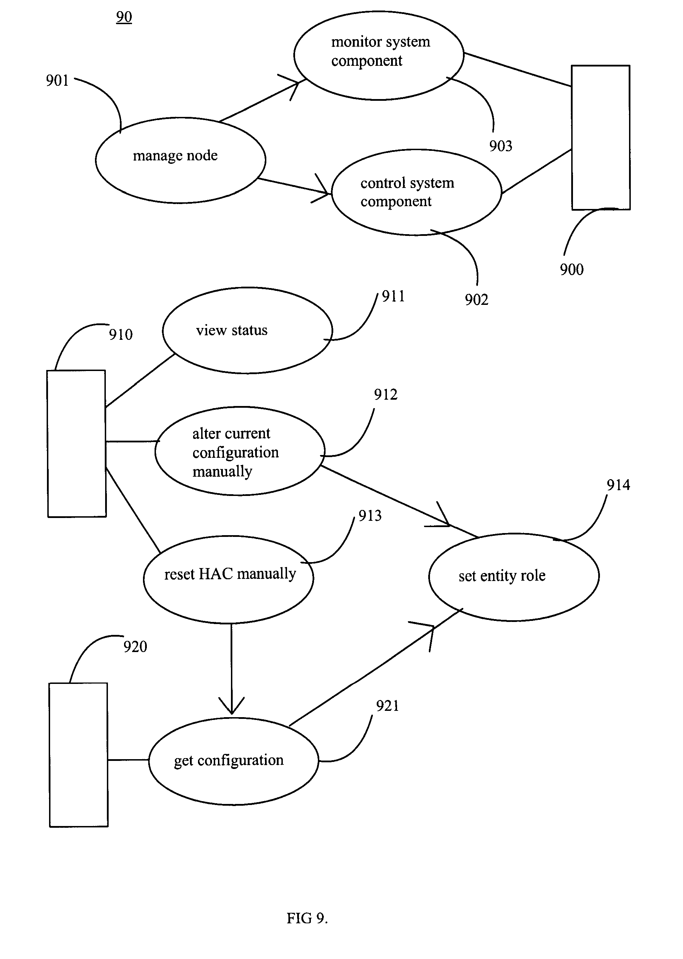

Figure 9 exhibits use cases of the invention as a schematic flow diagram. The actors in the exemplary system 90 are system component 900, administrator 910, and configuration database 920. The administrator 910 is typically a human administering the system. The administrator 910 is typically allowed to view and alter configurations. In addition, the administrator may also view the system status and diagnostics information in order to help the system to operate correctly. The configuration database 920 is typically a centrally managed, persistent database containing the system configuration information. System component 930 is typically a piece of software or hardware, whose status and health the high availability controller 530, 640 directly manages. Typically, managed system components are computer processes like CEM/CD or MS SQL Server.

In the "view status" use case 911 the high availability controller 530, 640 is queried information about the current node status. In many embodiments the returned information contains all the managed entities, their status and health. The administrator 910 may use this feature to visually monitor the node.

In the "alter current configuration manually" use case 912 the administrator may use the high availability controller 530, 640 user interface to manually change the current configuration. In some embodiments, the manual modifications are limited to role changes for the high availability controller 530, 640 and its managed entities, such as the virtual units 230, 240, 250. The modification typically has no effect on the configuration database 920 content and thus it is lost after a reset or restart of a high availability controller 530, 640 instance. In some embodiments overriding "save" conditions may be defined. However in some embodiments in order to make permanent changes, the administrator 910 needs to modify the central configuration database 920 and then signal the high availability controller 530, 640 to fetch the modified configuration data.

In the "reset HAC manually" use case 913 the high availability controller 530, 640 is reset, and the process is restarted and configuration is fetched from the configuration database. This use case is also available on the high availability controller user interface 510, 520 in some embodiments. In the "manage node" use case 901 the monitoring of all managed entities is initiated and control actions are generated accordingly. In some embodiments the high availability controller 530, 640 continuously manages its sub entities by executing entity monitoring, deducing necessary actions and implementing the actions via entity controlling mechanisms when needed. Typically the entity management initiates control actions to the managed entity.

In the "control system component" use case 902 control signals are issued to an entity, i.e. an internal high availability controller 530, 640 component, in order to change the status of a system component to a desired value. Each entity type will typically have a suitable control mechanism attached that interacts with the real system component represented by the entity and executes the actual control actions in some embodiments. In the "monitor system component" use case 903 system component 900 health and status is monitored. Each entity type will typically have a suitable monitoring mechanism attached that interacts with the real system component represented by the entity and executes the actual control actions in some embodiments.

In the "set entity role" use case 914 the role of an entity, i.e. an internal high availability controller 530, 640 component, is set or modified. The entity might be one of the managed entities or the, i.e. an internal high availability controller node itself. In the "get configuration" use case 921 the high availability controller 530, 640 fetches its configuration data from the central configuration database and applies the fetched configuration. A local copy of the data may also be made in some embodiments for being used later is the database is not available. In addition to the high availability controller 530, 640 configuration attributes, the configuration data includes the list of processes and configuration data for them in some embodiments.

The invention has been explained with reference to the aforementioned embodiments and several industrial and commercial advantages of the invention have been demonstrated. A significant advantage of the invention is that it is possible to provide either significantly less or more virtual backup units than there are servers in use, and these virtual backup units may be realised on a random number of server machines. This allows for great flexibility in both hardware investments and the level of availability sought from the system. The invention also has the advantage of allowing to capture or transfer the IP address of the failed resource to the virtual backup unit. Thus, the external agents only see a short interruption in service, and afterwards all services resume as normal.

The invention is not restricted only to the aforementioned embodiments, as many variants are conceivable without departing from the original inventive idea and scope of the attached claims.

### REFERENCES:

- WO0215030A1, "Distributed Multimedia Software Based Call Center", Ezerzer Ran Jarquin Robert, Aljane Ali, Borodow Eli, Holly Gerald, Marguilles Edwin, Telephony@work Inc, 2002,
- US6389005,"Automatic backup trunking for voice over the internet", Cruickshank, Brian, Nortel Networks Limited, 1997.

## Claims

1. A method for ensuring high availability in a software based contact centre (200) relaying at least phone calls and/or Voip calls, comprising at least one high availability control unit (220), **characterised by** the following steps,
- at least one high availability control unit analyses the overall system status of the software based contact centre,
- at least one high availability control unit (220) controls and monitors at least one virtual backup unit (230, 240, 250),
- at least one resource provided by the software based contact centre fails,
- at least one virtual backup unit (230, 240, 250) is initialised to take over at least one failed resource,
- at least one resource (231, 232, 233, 234, 235, 236) of at least one virtual backup unit replaces at least one failed resource,
- service of at least one failed resource is resumed.

2. A method as claimed in claim 1, **characterised in that**, the IP address of at least one failed resource is allocated to at least one virtual backup unit (230, 240, 250), and/or a virtual backup unit resource (231, 232, 233, 234, 235, 236).

3. A method as claimed in claim 1, **characterised in that**, the software based contact centre (200) comprises any of the following: at least one database server (400), disk array (410), gateway server (430), application server (420), external phone centre (440), virtual phone (460), a H.323 phone (450).

4. A method as claimed in claim 1, **characterised in that**, the high availability control unit comprises any of the following: at least one configuration database interface (630), high availability controller control interface (620), adapters and plug-ins for proprietary services (660), MS-Windows Services (670), other external services (650).

5. A method as claimed in claim 1, **characterised in that**, the virtual backup unit may comprise any of the following resources: an application server (CEM) (231) for running applications, a call dispatcher (CD) (232) for call routing and switching and for communicating with a GWS/GWC (Gateway System/Gateway Controller), H323 Bridge (HB) (233) for communicating with H323 devices, H323 Gatekeeper (HGK) (234) for H323 devices, file storage (235), an IP address (236).

6. A method as claimed in claim 1, **characterised in that**, any of the following are distributed on multiple server devices: at least one software based contact centre (200), at least one high availability control unit (220), at least one virtual unit (230, 240, 250).

7. A method as claimed in claim 1, **characterised in that**, the said controlling and monitoring may include any of the following: updating of configuration data, IP address change, IP address allocation, process monitoring and control, communication of statistical data.

8. An arrangement for ensuring high availability in a software based contact centre (200), arranged to relay at least phone calls and/or Voip calls comprising at least one high availability control unit (220), **characterised in that**,
- at least one high availability control unit (220) is arranged to analyse the overall system status of the software based contact centre (200),
- at least one high availability control unit (220) is arranged to control and monitor at least one virtual unit (230, 240, 250),
- at least one high availability control unit (220) is arranged to have logical communication connections to at least one virtual backup unit (230, 240, 250),
- at least one high availability control unit (220) is arranged to initialise at least one virtual backup unit (230, 240, 250) to replace at least one failed resource with a backup resource (231, 232, 233, 234, 235, 236).

9. An arrangement as claimed in claim 8, **characterised in that**, the IP address of at least one failed resource is allocated to at least one virtual backup unit (230, 240, 250), and/or a virtual backup unit resource (231, 232, 233, 234, 235, 236).

10. An arrangement as claimed in claim 8, **characterised in that**, the software based contact centre (200) comprises any of the following: at least one database server (400), disk array (410), gateway server (430), application server (420), external phone centre (440), virtual phone (460), a H.323 phone (450).

11. An arrangement as claimed in claim 8, **characterised in that**, the high availability control unit is arranged to comprise any of the following: at least one configuration database interface (630), high availability controller control interface (620), adapters and plug-ins for proprietary services (660), MS-Windows Services (670), other external services (650).

12. An arrangement as claimed in claim 8, **characterised in that**, the virtual backup unit may comprise any of the following resources: an application server (CEM) (231) for running applications, a call dispatcher (CD) (232) for call routing and switching and for communicating with a GWS/GWC (Gateway System/Gateway Controller), H323 Bridge (HB) (233) for communicating with H323 devices, H323 Gatekeeper (HGK) (234) for H323 devices, file storage (235), an IP address (236).

13. An arrangement as claimed in claim 8, **characterised in that**, any of the following are distributed on multiple server devices: at least one software based contact centre (200), at least one high availability control unit (220), at least one virtual unit (230, 240, 250).

14. An arrangement as claimed in claim 8, **characterised in that**, the said controlling and monitoring may include any of the following: updating of configuration data, IP address change, IP address allocation, process monitoring and control, communication of statistical data.

15. A memory storage unit containing software based contact centre server software (200), arranged to relay at least phone calls and/or Voip calls further comprising at least one high availability control unit (220), **characterised in that**,
- at least one high availability control unit (220) is arranged to analyse the overall system status of the software based contact centre (200),
- software based contact centre server software (200) and/or high availability control unit (220) is arranged to form at least one virtual backup unit (230, 240, 250) and/or form logical connections to at least one predefined virtual backup unit (230, 240, 250) that are stored in the memory storage unit,
- at least one high availability control unit (220) is arranged to control and monitor at least one virtual unit (230, 240, 250),
- the high availability control unit (220) is arranged to initialise at least one virtual backup unit (230, 240, 250) to replace at least one failed resource with a backup resource (231, 232, 233, 234, 235, 236).

16. A memory storage unit as claimed in claim 15, **characterised in that**, the IP address of at least one failed resource is arranged to be allocated to at least one virtual backup unit (230, 240, 250), and/or a virtual backup unit resource (231, 232, 233, 234, 235, 236).

17. A memory storage unit as claimed in claim 15, **characterised in that**, the high availability control unit (220) comprises any of the following: at least one configuration database interface (630), high availability controller control interface (620), adapters and plug-ins for proprietary services (660), MS-Windows Services (670), other external services (650).

18. A memory storage unit as claimed in claim 15, **characterised in that**, the virtual backup unit may comprise any of the following resources: an application server (CEM) (231) for running applications, a call dispatcher (CD) (232) for call routing and switching and for communicating with a GWS/GWC (Gateway System/Gateway Controller), H323 Bridge (HB) (233) for communicating with H323 devices, H323 Gatekeeper (HGK) (234) for H323 devices, file storage (235), an IP address (236).

19. A memory storage unit as claimed in claim 15, **characterised in that**, the said arranged controlling and monitoring may include any of the following: updating of configuration data, IP address change, IP address allocation, process monitoring and control, communication of statistical data.

20. A memory storage unit as claimed in claim 15, **characterised in that**, any of the following are arranged to be distributed and installed on multiple server devices: at least one software based contact centre (200), at least one high availability control unit (220), at least one virtual unit (230, 240, 250).
